# FASCICULE DE BREVET EUROPEEN

(11) **EP 3 034 208 B1**
(45) Date de publication et mention de la délivrance du brevet: **07.02.2018**
(21) Numéro de dépôt: 15200033.7
(22) Date de dépôt: 15.12.2015
(51) Int. Cl.: B22F 3/105, B22F 3/11, B22F 7/02, B29C 67/00, B32B 3/12

(54) **PROCÉDÉ D'OBTENTION DE STRUCTURE SANDWICH FORTEMENT ANISOTROPE INTÉGRANT DES FONCTIONS MÉCANIQUES, THERMIQUES ET ÂME ET PEAUX DE STRUCTURE OBTENUES PAR GRADIENT MÉTALLURGIQUE OU COMPOSITE**
HERSTELLUNGSVERFAHREN EINER STARK ANISOTROPEN SANDWICHSTRUKTUR MIT INTEGRIERTEN MECHANISCHEN UND THERMISCHEN FUNKTIONEN, SOWIE KERN UND HAUT DER STRUKTUR, DIE ÜBER DEN METALLURGISCHEN ODER VERBUND-GRADIENTEN ERSTELLT WURDEN
METHOD FOR OBTAINING HIGHLY ANISOTROPIC SANDWICH STRUCTURE INCORPORATING MECHANICAL AND THERMAL FUNCTIONS, AND STRUCTURE CORE AND SKINS OBTAINED BY METALLURGICAL OR COMPOSITE GRADIENT

(30) Priorité: 15.12.2014 FR 1402904
(43) Date de publication de la demande: 22.06.2016
(73) Titulaire: OPT'ALM, 31450 Ayguesvives (FR)
(72) Inventeur: TOUFINE, Alain, 31450 Ayguesvives (FR)
(74) Mandataire: Giraud-Gasnier, Leslie

(56) Documents cités:
- EP-A1- 2 730 353
- DE-A1-102008 041 788
- DE-A1-102012 020 671

## Description

La présente invention a pour objet un procédé d'obtention de structures raidies telles que des panneaux anisotropes intégrant des fonctions mécaniques et thermiques ainsi que l'âme et les peaux obtenues.

L'utilisation de structures anisotropes sandwich élancées telles que les panneaux sandwich permettent d'obtenir intrinsèquement des rigidités importantes en limitant la masse, en sorte qu'elles intéressent particulièrement l'industrie aéronautique, spatiale et navale pour fabriquer des structures primaires comme des caissons de voilures, des murs de satellites, des mats.

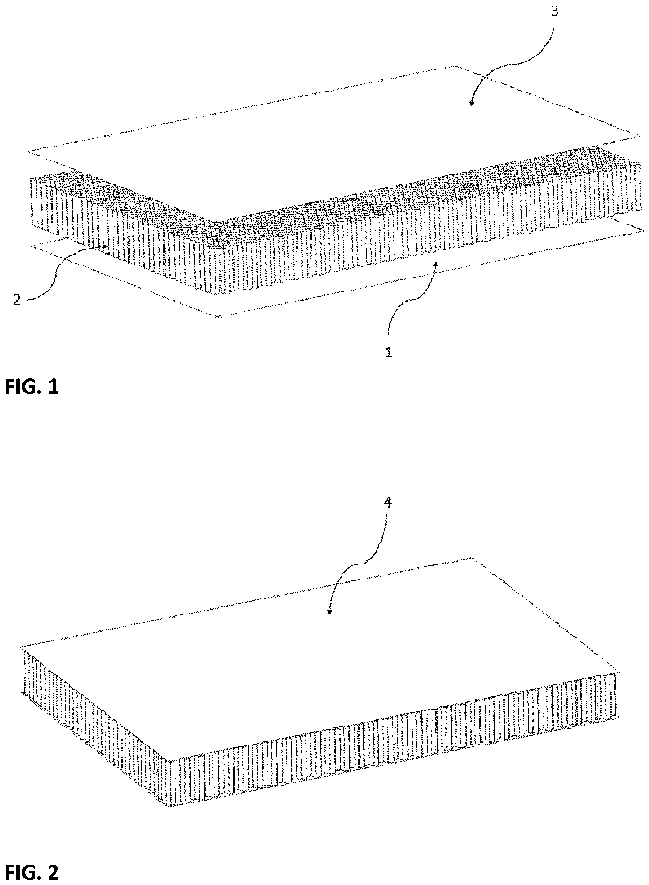

Traditionnellement, les panneaux sandwich sont généralement des ensembles d'épaisseur variable, assemblés par collage, composés d'une peau inférieure mince 1, d'une âme épaisse 2 et d'une peau supérieure mince 3 comme illustré sur la figure 1. Les peaux sont obtenues à partir de tôles métalliques ou de matériaux en fibres de carbone ou fibres de verre. Les âmes sont obtenues à partir de mousses synthétiques expansées ou pour les applications à fortes sollicitations mécaniques, en Nid d'Abeille (NIDA) pouvant être micro perforé pour les applications aérospatiales.

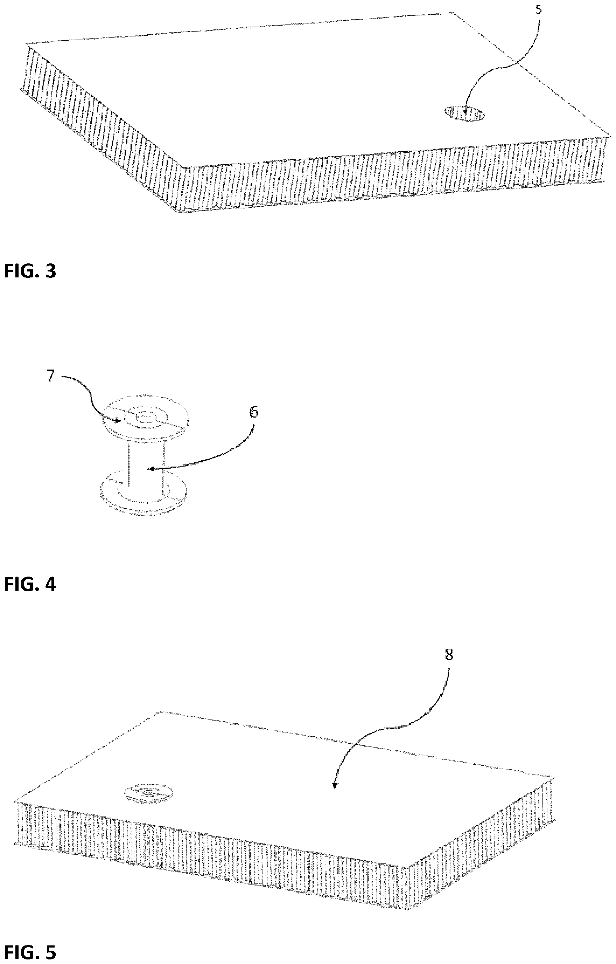

Afin d'assurer des liaisons mécaniques sur un élément de structure ou de voilure d'aéronef ou sur un mur de satellite ou sur un mat de voilier, des inserts métalliques ou composites en fibres de carbone sont rapportés à l'intérieur des panneaux sandwich par collage à chaud ou à froid selon le besoin comme illustré sur les figures 3, 4 et 5. Les équipements ou les panneaux sandwich sont assemblés entre eux à l'aide de vis. Ces assemblages sont aussi assurés selon les besoins par collage de cornières en matériaux composites.

Le document DE-A-10 2012 020671 décrit un procédé de fabrication d'une tuile de toit, renforcée et allégée pouvant intégrer des matériaux isolants. Dans certaines applications aéronautiques et spatiales nécessitant de drainer fortement les calories d'une zone vers une autre, des accessoires sont employés, tels que des caloducs 9, contenant un fluide caloporteur, ou des tresses thermiques ou des radiateurs ou des cellules Pelletier. Ces dits caloducs 9 et radiateurs sont disposés par collage sur les peaux, soit à l'extérieur des panneaux, soit à l'intérieur.

Le procédé de fabrication actuel des panneaux sandwich multi fonctionnels mécanique et thermique repose sur le collage des différents constituants entre eux :
- Les peaux 1, 3 sur les âmes 2,
- Les inserts 6 à l'intérieur des panneaux 8, soit à fleur de peau soit légèrement au-dessus de la peau ; il s'agit alors d'insert collerette 7,
- Les caloducs 9 à l'intérieur des panneaux 10 côté âme ou à l'extérieur des panneaux sur les peaux,
- Les radiateurs sur les peaux sur les faces extérieures du panneau.

Ces collages ont, pour la plupart, lieu sous pression et/ou sous vide, à froid ou à haute température, nécessitant l'emploi de presse chauffante ou d'autoclave.

Mécaniquement, les peaux ont pour but de reprendre les efforts de membrane parallèles au plan du panneau, et les efforts de flexion. Ces flux de forces sont souvent importants et nécessitent de renforcer localement les peaux en les épaississant à l'aide de doubleurs internes ou externes aux peaux. Ces doubleurs sont généralement rapportés par collage après assemblage du panneau sandwich.

Mécaniquement, le rôle de l'âme est de reprendre les flux d'effort de cisaillement appliqués au panneau, de maintenir les peaux à égale distance les unes des autres, d'éviter le flambement des peaux et du panneau. Toutefois, la présence de cette âme n'est pas utile sur la totalité de la surface du panneau.

La résistance et la ténacité des peaux 1, 3 sur l'âme 2 sont dégradées par rapport aux caractéristiques des matériaux métalliques ou composites fibres de carbones employés par l'ajout de colle entre les peaux et l'âme sur toute la surface du panneau.

Les zones du panneau sandwich, très fortement sollicitées par les efforts de traction multiaxiaux, les moments de flexion et les forces de cisaillement, se trouvent au droit des assemblages vis/insert. Cela nécessite de disposer des densifications de l'âme avec des alvéoles de Nid d'Abeille plus petites et d'épaisseur plus importante 18, d'ajouter des renforts de peaux de dimensions et d'épaisseurs variables.

La résistance et la ténacité de ces zones sont dégradées par rapport aux caractéristiques des matériaux métalliques ou composites fibres de carbones employés par l'apport de colle nécessaire aux assemblages.

Thermiquement, les peaux d'un panneau sandwich assurent des fonctions d'échanges par conduction, par radiation ou plus rarement par convection. Dans ce cas, l'apport de colle pour assembler les peaux à l'âme, pour fixer les caloducs et les radiateurs, altère fortement les caractéristiques des matériaux utilisés, de telle sorte qu'il faut employer des colles chargées en particules de métaux précieux, comme l'or ou l'argent par exemple pour permettre une bonne conductivité thermique.

Ainsi, il a été constaté que selon la nature des matériaux qui les composent, les panneaux anisotropes sandwich sont plus ou moins performants vis à vis des sollicitations mécaniques ou des sollicitations thermiques, et qu'un compromis insuffisant doit toujours être trouvé.

Il a été constaté que, pour la plupart, les panneaux sandwich fabriqués pour le domaine aéronautique, spatial et naval, sont constitués d'une âme de nature unique et homogène, de géométrie uniforme et répétitive, y compris dans les zones fortement contraintes mécaniquement.

Il a été constaté également que, pour la plupart, les panneaux sandwich ont leurs propriétés mécaniques globales dégradées par l'apport de colles nécessaires aux divers assemblages peaux/âmes, vis/inserts, caloducs/peaux, radiateurs/peaux.

Il a été constaté également que, pour la plupart, les panneaux sandwich intégrant des fonctions thermiques, les formulations de colles utilisées sont difficiles à mettre en oeuvre, coûteuses de par leur composition incluant des métaux précieux ou des NanoTube Carbone métallisés, et ont de très faibles résistances mécaniques.

Il a été constaté également que, pour la plupart, les panneaux sandwich sont plans ou faiblement courbés et que dans ce cas les procédés de fabrication sont longs, délicats et complexes.

Il a été constaté que, pour la plupart, la fabrication des panneaux sandwichs nécessite des décapages de surfaces manuelles ou chimiques, employant des produits très toxiques tels que l'acide sulfo-chromique ou la désoxydation SOCOSURF®.

Il a été constaté également que dans le cas de peaux en matériaux composites fibres de carbone ainsi que pour les colles employées, les exigences de traçabilité imposent de grandes précautions dans les contrôles entrée matière, le suivi des dates de péremption, les contrôles de préparation des colles et des surfaces, le contrôle des temps de mise en oeuvre de ces matières et adhésifs. Enfin pour les applications spatiales il faut de plus dégazer les colles.

La présente invention repose sur une phase initiale d'ingénierie en optimisation topologique numérique des structures et d'analyse fonctionnelle, suivi de l'usage des techniques de fabrications additives par frittage laser ou par faisceau d'électron de poudres métalliques ou de matériaux synthétiques.

La présente invention a pour but de proposer un procédé de conception, de fabrication et d'obtention simultanée sans emploi d'une quelconque colle :
- des peaux supérieures, inférieures et intermédiaires de panneaux anisotropes sandwich, métalliques ou en matériaux composites selon les besoins en reprise d'efforts mécaniques, de fortes rigidités et de faibles masses,
- d'une âme de panneau anisotrope, ou de plusieurs âmes de natures variables, continues ou discontinues, de géométries variables et de densité variable sur l'ensemble de la structure, selon les besoins en reprise d'efforts mécaniques ou de drainages thermiques locaux ou globaux,
- d'inserts métalliques ou composites, de formes variables et optimisées, de compositions métallurgiques ou d'alliages variables par rapport aux peaux, ou de densité de charges métalliques variables dans le thermoplastique, selon les besoins en reprise d'efforts mécaniques ou de drainages thermiques locaux,
- de caloducs de capacités variables, rectilignes ou courbes, pouvant serpenter à la manière d'un réseau dans le plan (2D) du panneau anisotrope mais aussi pouvant joindre les peaux supérieures et inférieures (3D), selon les besoins de drainages thermiques globaux et locaux.

Le procédé de fabrication du panneau anisotrope sandwich fonctionnalisé, raidi intégrant les fonctions mécaniques et thermiques selon l'invention, se caractérise essentiellement en ce qu'il consiste à réaliser les étapes suivantes :
- fabriquer la peau inférieure en des dimensions choisies en matériau métallique ou composite à matrice thermoplastique chargée, c'est à dire renforcée de charges métalliques,
- élever, simultanément à la construction de la peau inférieure, l'âme en des dimensions choisies, en des formes et géométries variables juxtaposées ou non, en des densités variables, en les mêmes matériaux et alliages que la peau inférieure ou dans des dosages métallurgiques ou composants variables,
- élever, simultanément à la construction de l'âme, et localement selon les fonctions mécaniques à assurer, les zones densifiées ou massives représentatives des jonctions vissées (inserts), en des dimensions choisies et en des densités variables, en les mêmes matériaux et alliages que la peau inférieure ou dans des dosages métallurgiques ou composants variables,

- élever, simultanément à la construction de l'âme et des zones densifiées, et localement selon les fonctions thermiques à remplir, les caloducs ou drains thermiques, en des dimensions choisies de formes variables dans leurs plans et hors de leurs plans, en les mêmes matériaux et alliages que la peau inférieure ou dans des dosages métallurgiques ou composants variables, de sorte à obtenir une âme fonctionnalisée,
- élever, simultanément à la construction de la peau inférieure et de l'âme fonctionnalisée, la peau supérieure en des dimensions choisies, en les mêmes matériaux et alliages que la peau inférieure ou dans des dosages métallurgiques ou composants variables, en sorte d'obtenir le panneau anisotrope sandwich fonctionnalisé.

De préférence, les peaux supérieure et inférieure, l'âme, les inserts, les zones densifiées, les caloducs et les drains thermiques sont obtenus par apport de matières métalliques ou d'alliages ou de résines thermoplastiques chargées de métal, sous la forme de poudres en fusion.

Selon une caractéristique intéressante du procédé, les peaux supérieure et inférieure, l'âme, les inserts, les zones densifiées, les caloducs et les drains thermiques sont obtenus au cours d'une seule opération et sans usage de colles, c'est à dire quasi simultanément.

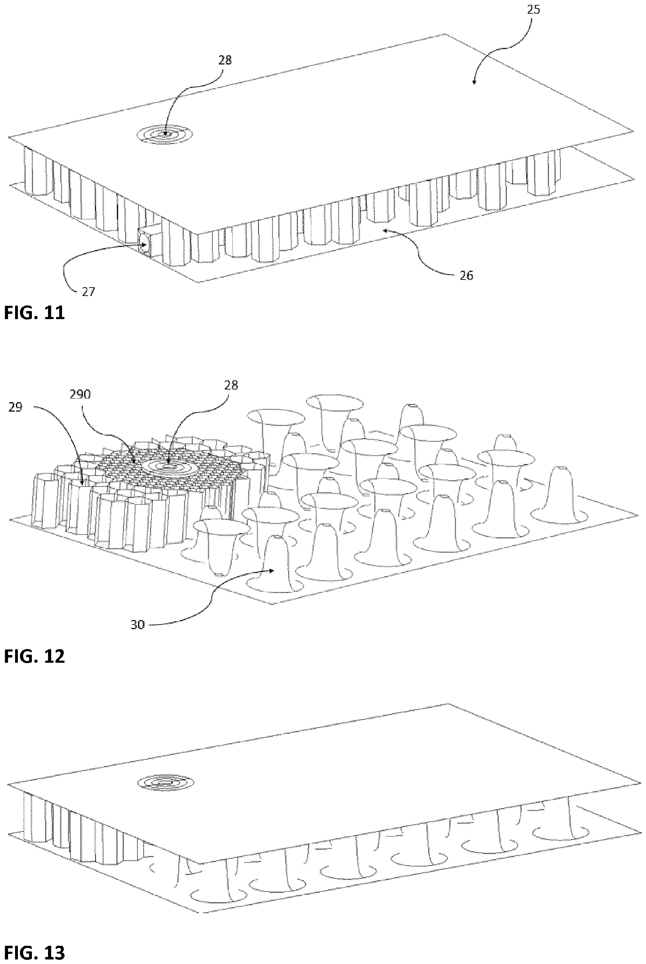

Selon une caractéristique additionnelle du procédé selon l'invention, l'âme peut avoir des formes ou des profils différents sur l'ensemble de la surface du panneau anisotrope comme illustré sur la figure 12 : en « tasse de café », renversée ou non, en épingle, en cylindre plein ou creux, en triangle, en carré ou en hexagone, par exemple comme le Nid d'Abeille classique, et ces sections peuvent avoir des épaisseurs variables suivant la normale au plan des peaux inférieure et supérieure.

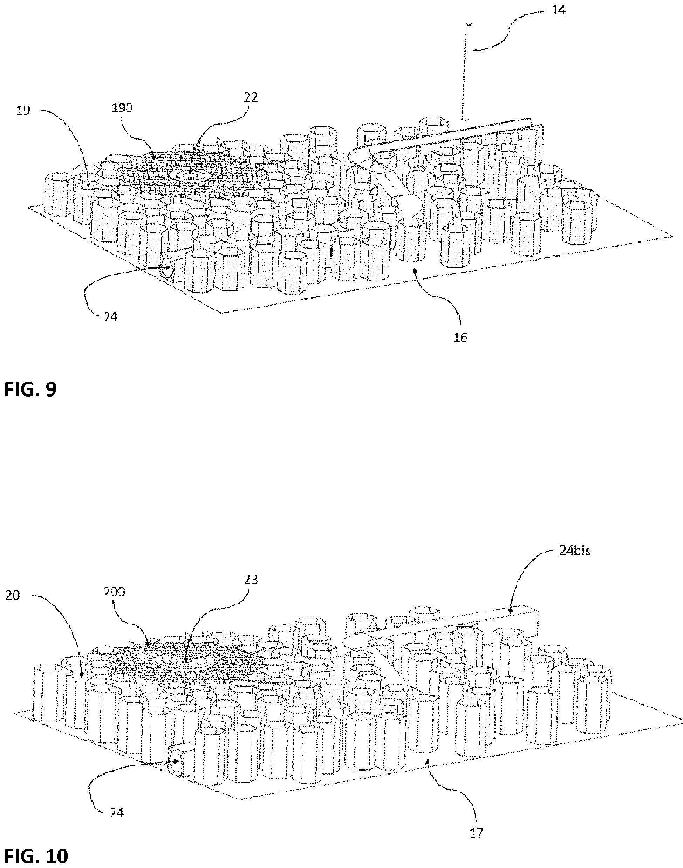

Selon une autre caractéristique additionnelle du procédé selon l'invention, les différentes formes d'âmes ainsi obtenues peuvent être disposées selon les besoins de résistance mécanique comme illustré sur la figure 9, adjacentes et jointes les unes aux autres ou non, c'est à dire non adjacentes et disjointes, sur l'ensemble de la surface du panneau anisotrope.

Selon une autre caractéristique additionnelle du procédé selon l'invention, les zones densifiées aptes à recevoir et à assurer des fonctions mécaniques peuvent être disposées selon les besoins de résistance mécanique comme illustré sur la figure 10, localement ou sur l'ensemble de la surface du panneau anisotrope, en des formes cylindriques de diamètre constant 6 suivant la normale au plan de pose comme illustré sur la figure 4 ou en des formes avec collerettes 7 ou en des formes en « X plein» plus ou moins prononcées permettant ainsi de mieux répartir la transition des efforts de cisaillement et de traction aux peaux du panneau.

Selon une autre caractéristique additionnelle du procédé selon l'invention, les zones densifiées aptes à recevoir et à assurer des fonctions thermiques peuvent être disposées selon les besoins globaux ou locaux de dissipation et également selon des contraintes d'aménagement, sur l'ensemble de la surface du panneau anisotrope, en un réseau plan 2D serpentant sur et/ou sous les peaux, ou en un réseau en 3Dimensions serpentant entre les peaux inférieure et supérieure ou intermédiaire comme illustré sur la figure 10.

Selon une autre caractéristique additionnelle du procédé selon l'invention, les propriétés mécaniques, thermiques ou les deux ensembles, peuvent être ajustées par zones grâce à des gradients métallurgiques obtenus en faisant varier au cours de la fabrication les pourcentages métallurgiques de l'alliage employé, ou de matériaux métalliques ou thermoplastiques chargés, rendant ainsi le panneau anisotrope multi matériaux. Ainsi, les peaux supérieure et inférieure, l'âme, les inserts, les zones densifiées, les caloducs et les drains thermiques peuvent être obtenus en faisant varier, au cours de la fabrication, les pourcentages métallurgiques de l'alliage ou du métal employé ou du composite thermoplastique chargé.

Selon une autre caractéristique additionnelle du procédé selon l'invention, les préparations de surfaces et les collages de peaux, d'inserts, de caloducs, sont supprimées.

Selon une autre caractéristique additionnelle du procédé selon l'invention, les assemblages en 3Dimensions de panneaux anisotropes de type sandwich intégrant les fonctions mécaniques et thermiques, sont effectués en une seule opération sans utiliser une presse chauffante ou un autoclave.

Selon une autre caractéristique additionnelle du procédé selon l'invention, les phases de contrôle après polymérisation des colles sont supprimées et remplacées par un seul contrôle final par Tomographie X.

Les avantages et les caractéristiques du procédé selon l'invention, ressortiront plus clairement de la description qui suit et qui se rapporte aux figures annexées, lesquelles en représentent un mode de réalisation non limitatif.

Plus particulièrement :
- Les figures 1 à 7 présentent le mode d'assemblage actuel d'un panneau raidi intégrant des fonctions mécaniques et thermiques.
- Les figures 8 à 13 montrent ce que devient la construction d'un panneau sandwich par la fusion de poudres métalliques alliées, avec une variation des pourcentages métallurgiques des alliages selon la zone et selon la fonction mécanique et/ou thermique à assurer, avec l'âme du panneau sandwich de forme et de densité quelconque et adaptée au besoin de résistance mécanique.
Dans les figures annexées :
- La figure 1 représente une vue en éclaté de la composition classique d'un panneau sandwich avec la peau inférieure 1, la peau supérieure 3 et l'âme centrale 2. Il peut y avoir des peaux intermédiaires et des âmes intermédiaires non représentées.
- La figure 2 représente le panneau anisotrope sandwich assemblé 4 par la technique classique de collage des peaux sur l'âme.
- La figure 3 représente le panneau sandwich dans lequel un ou plusieurs alésages 5 et des détourages sont réalisés aux endroits de la structure devant recevoir les liaisons mécaniques pour supporter des équipements ou pour joindre un panneau adjacent.
- La figure 4 représente un exemple d'insert cylindrique qui vient prendre place dans l'alésage 5 effectué au préalable dans le panneau sandwich. L'insert peut être de forme très variable selon l'architecture de la structure et des besoins en reprise d'efforts. L'insert est pourvu d'un fût 6 massif permettant soit de visser ou soit de laisser passer une vis, et il est respectivement taraudé ou alésé. L'insert peut avoir en partie basse et/ou haute une collerette 7 qui répartie le torseur des forces sur les peaux.
- La figure 5 montre l'insert implanté par injection de colle dans le panneau sandwich 8 préalablement fabriqué et alésé. Le panneau 8 intègre la fonction mécanique.

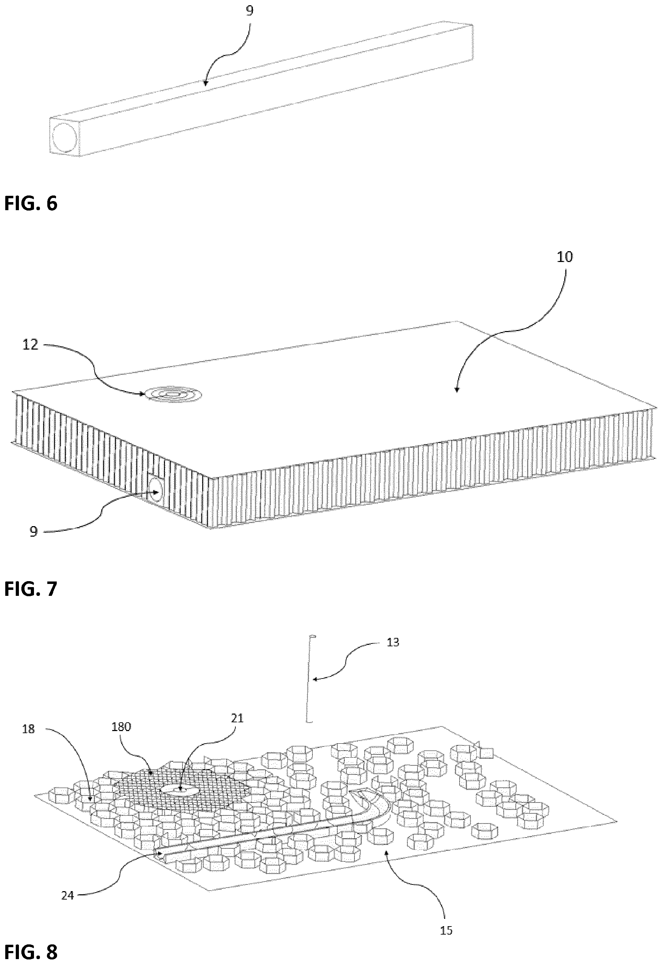

- La figure 6 schématise un caloduc rectiligne 9 qui se caractérise par une géométrie extérieure plane pour permettre les collages sur les zones planes et creuse à l'intérieur pour permettre le passage du fluide caloporteur (généralement de l'ammoniac).
- La figure 7 représente le caloduc rectiligne 9 implanté dans le panneau sandwich 10, qui intègre alors la fonction thermique, le caloduc 9 étant collé à la peau inférieure sur cette figure. Le collage du caloduc 9 a lieu au préalable sur les peaux. Ensuite les peaux sont collées à l'âme. Les fonctions mécaniques peuvent être ajoutées ensuite telles que décrites en figures 4 et 5. L'insert 12 est rapporté par collage dans le panneau sandwich 10.
- Les figures 8, 9, 10 et 11 montrent comment sur une peau inférieure 15, 16, 17, 26 fabriquée sur place par la technologie additive de poudres métalliques en fusion ou préalablement approvisionnée, se rapportent successivement, par strates, mais simultanément d'un point de vue fonctionnel :
   o l'âme 18, 19, 20 de géométrie et de densité et de nature variables,
   o les zones densifiées 180, 190, 200, 290 et le ou les inserts 21, 22, 23, 28, ou zones massives, de géométries et de nature variables, de dosage métallurgique et de pourcentage d'alliage différents des peaux 15, 16, 17, 26 et des âmes 18, 19, 20,
   o le ou les caloducs 24, 24bis, 27 de forme variable dans le plan 2D ou hors du plan pour rejoindre les peaux inférieure 15, 16, 17, 26 et supérieure 25 ou rejoindre un panneau sandwich adjacent non coplanaire ou incliné,
   o la peau supérieure 25 soit par fusion laser de poudres métalliques, soit par soudage laser d'une peau fabriquée au préalable.

Les repères 13, 14 représentent à différents stades de la fabrication l'apport de couches successives de matière métallique en fusion ou le faisceau laser qui vient faire fondre la poudre métallique disposée sous forme de lit de poudre.

L'âme à laquelle sont associés les zones densifiées, les inserts, les caloducs et drains thermiques peut être dénommée « âme fonctionnalisée ».
- La figure 12 montre différents types de géométries non limitatives qui sont envisagés pour composer l'âme du panneau sandwich selon les résultats des analyses numériques d'optimisation topologique des structures : âme en forme d'hexagone classique 29, de « tasse de café » inversée ou non 30, de rond, de triangle. La densité de l'âme peut être quelconque et les cellules qui constituent l'âme 29 peuvent être disjointes les unes des autres. Le ou les caloducs, le ou les inserts, ne sont pas représentés, toutefois leur mise en place se fait comme décrit en figures 8, 9, 10 et 11.
- La figure 13 montre le panneau sandwich avec âme quelconque ainsi fabriqué selon le procédé décrit dans les figures 8, 9, 10 et 11.

L'invention concerne donc un procédé de fabrication de structure sandwich incluant des fonctions mécaniques et thermiques, monobloc et multi matériaux obtenue par gradient métallurgique et variation des pourcentages des composants des alliages ou des composites thermoplastiques employés.

Il permet d'obtenir les peaux et l'âme du panneau dans une même opération et d'un seul tenant, sans autre apport de matière que le métal ou l'alliage ou le composite thermoplastique qui compose la structure.

De plus, les fonctions mécaniques comme les inserts et les fonctions thermiques comme les caloducs, sont obtenues de la même manière, avec de plus des variations dans le dosage des composés métalliques ou composites employés lors de la fabrication, en sorte que le produit fini est multi fonctionnel, monobloc et multi matériaux.

Ainsi, par rapport à la technique usuelle d'assemblage par collage des constituants, âme, peaux, inserts, caloducs, les caractéristiques globales mécaniques et thermiques de la structure sandwich sont fortement améliorées. Apportées localement, les variations dans les pourcentages des composants des alliages ou des composites thermoplastiques employés, accroissent la ténacité, la résistance et la conductivité des zones en question.

Le procédé de fabrication proposé est particulièrement destiné aux structures de systèmes et sous-systèmes de satellites, aux pièces structurales d'aéronefs et aux éléments de packaging électroniques d'aéronefs, aux structures de protection et enveloppantes telles que capots, nacelles des turbomachines, ainsi qu'aux éléments de mât de navire.

## Revendications

1. Procédé de fabrication d'un panneau anisotrope sandwich fonctionnalisé, raidi, allégé, intégrant des fonctions mécaniques et thermiques consistant à réaliser les étapes suivantes :
• fabriquer la peau inférieure (15, 16, 17, 26) en des dimensions choisies en matériau métallique ou composite à matrice thermoplastique chargée,
• élever, simultanément à la construction de la peau inférieure, l'âme (18, 19, 20) en les mêmes matériaux que la peau inférieure (15, 16, 17, 26), en des dimensions choisies, en des formes et géométries variables juxtaposées ou non, et en des densités variables,
• élever, simultanément à la construction de l'âme (18, 19, 20), les zones densifiées (180, 190, 200, 290) ou massives (21, 22, 23) assurant des jonctions mécaniques (21), en des dimensions choisies et en des densités variables,
• élever, simultanément à la construction de l'âme (18, 19, 20) et des zones densifiées (180, 190, 200, 290) ou massives (21, 22, 23, 28), les caloducs ou drains thermiques (24, 24bis, 27), en des dimensions choisies, de formes variables dans leurs plans et hors de leurs plans, de sorte à obtenir une âme fonctionnalisée,
• élever, simultanément à la construction de la peau inférieure et de l'âme fonctionnalisée, la peau supérieure (25), en des dimensions choisies en les mêmes matériaux et alliages que la peau inférieure (15, 16, 17, 26), en sorte d'obtenir le panneau anisotrope sandwich fonctionnalisé.

2. Procédé de fabrication selon la revendication 1, **caractérisé en ce que** les peaux inférieure (15, 16, 17, 26) et supérieure (25), l'âme (18, 19, 20, 29), les inserts (21, 22, 23, 28), les zones densifiées (180, 190, 200, 290), les caloducs et les drains thermiques (24, 24bis, 27) sont obtenus par apport de matières métalliques ou d'alliages ou de résines thermoplastiques chargées de métal, sous la forme de poudres en fusion.

3. Procédé de fabrication selon l'une quelconque des revendications précédentes, **caractérisé en ce que** l'âme (18, 19, 20, 29), les inserts (21, 22, 23, 28), les zones densifiées (180, 190, 200, 290), les caloducs et les drains thermiques (24, 24bis, 27), sont obtenus au cours d'une seule opération sans usage de colles, c'est-à-dire quasi simultanément.

4. Procédé de fabrication selon l'une quelconque des revendications précédentes, **caractérisé en ce que** l'âme (18, 19, 20, 29), les inserts (21, 22, 23, 28), les zones densifiées (180, 190, 200, 290), les caloducs et les drains thermiques (24, 24bis, 27), sont réalisés en des profils de géométries variables tels qu'en forme des « tasse de café » renversée ou non (30), en épingle, en cylindre plein ou creux, en triangle, en carré, ou en hexagone.

5. Procédé de fabrication selon l'une quelconque des revendications précédentes, **caractérisé en ce que** les profils et formes quelconques de l'âme (18, 19, 20, 29) et des zones densifiées (180, 190, 200, 290), sont adjacents, juxtaposés et joints ou non adjacents et disjoints selon la résistance à assurer.

6. Procédé de fabrication selon l'une quelconque des revendications précédentes, **caractérisé en ce que** les inserts (21, 22, 23, 28), les zones densifiées (180, 190, 200, 290), les caloducs et les drains thermiques (24, 24bis 27), sont obtenus en faisant varier au cours de la fabrication les pourcentages métallurgiques de l'alliage ou du métal employé ou du composite thermoplastique chargé.

7. Procédé de fabrication selon l'une quelconque des revendications 1 à 6, **caractérisé en ce que** le panneau anisotrope ainsi fabriqué est fonctionnalisé, multi matériaux et monobloc.

## Patentansprüche

1. Verfahren zur Herstellung eines funktionalisierten, versteiften, erleichterten anisotropen Sandwichpaneels, das mechanische und thermische Funktionen integriert, darin bestehend, dass die folgenden Schritte durchgeführt werden:
• Herstellen einer unteren Haut (15, 16, 17, 26) mit ausgewählten Abmessungen, aus metallischem oder Verbundmaterial mit einer gefüllten thermoplastischen Matrize,
• gleichzeitig mit der Konstruktion der unteren Haut, Anheben des Kerns (18, 19, 20) aus den gleichen Materialien wie die untere Haut (15, 16, 17, 26) mit ausgewählten Abmessungen, mit aneinander oder nicht aneinander gereihten Formen und Geometrien und mit veränderlichen Dichten,
• gleichzeitig mit der Konstruktion des Kerns (18, 19, 20), Anheben der verdichteten Bereiche (180, 190, 200, 290) oder massiven Bereiche (21, 22, 23), die mechanische Verbindungen (21) sichern, mit ausgewählten Dimensionen und mit veränderlichen Dichten,
• gleichzeitig mit der Konstruktion des Kerns (18, 19, 20) und der verdichteten Bereiche (180, 190, 200, 290) oder massiven Bereiche (21, 22, 23, 28), Anheben der Wärmerohre oder der Wärmesenken (24, 24bis, 27) mit ausgewählten Abmessungen, mit veränderlichen Formen, in ihren Ebenen und außerhalb ihrer Ebenen, sodass ein funktionalisierter Kern erhalten wird,
• gleichzeitig mit der Konstruktion der unteren Haut und des funktionalisierten Kerns, Anheben der oberen Haut (25), mit ausgewählten Abmessungen, aus den gleichen Materialien und Legierungen wie die untere Haut (15, 16, 17, 26), sodass das funktionalisierte anisotrope Sandwichpaneel erhalten wird.

2. Herstellungsverfahren nach Anspruch 1, **dadurch gekennzeichnet, dass** die untere Haut (15, 16, 17, 26) und die obere Haut (25), der Kern (18, 19, 20, 29), die Einsätze (21, 22, 23, 28), die verdichteten Bereiche (180, 190, 200, 290), die Wärmerohre und die Wärmesenken (24, 24bis, 27) durch Zugabe von metallischen Materialien oder Legierungen oder mit Metall gefüllten thermoplastischen Harzen, in der Form von geschmolzenen Pulvern.

3. Herstellungsverfahren nach irgendeinem der vorhergehenden Ansprüchen, **dadurch gekennzeichnet, dass** der Kern (18, 19, 20, 29), die Einsätze (21, 22, 23, 28), die verdichteten Bereiche (180, 190 200, 290), die Wärmerohre und die Wärmesenken (24, 24bis, 27) während einem einzigen Arbeitsvorgang ohne Verwendung von Klebstoffen, das heißt fast gleichzeitig, erhalten werden.

4. Herstellungsverfahren nach irgendeinem der vorhergehenden Ansprüchen, **dadurch gekennzeichnet, dass** der Kern (18, 19, 20, 29), die Einsätze (21, 22, 23, 28), die verdichteten Bereiche (180, 190 200, 290), die Wärmerohre und die Wärmesenken (24, 24bis, 27) aus Profilen mit veränderlichen Geometrien, wie in der Form einer umgekehrten oder nicht umgekehrten "Kaffeetasse" (30), nadel- voll- oder hohlzylinder-, dreieck-, quadrat- oder sechseckförmig, hergestellt werden.

5. Herstellungsverfahren nach irgendeinem der vorhergehenden Ansprüche, **dadurch gekennzeichnet, dass** die beliebigen Profile und Formen des Kerns (18, 19, 20, 29) und der verdichteten Bereiche (180, 190, 200, 290) je nach der zu sichernden Festigkeit benachbart, aneinander gereiht und verbunden oder nicht benachbart und getrennt sind.

6. Herstellungsverfahren nach irgendeinem der vorhergehenden Ansprüche, **dadurch gekennzeichnet, dass** die Einsätze (21, 22, 23, 28), die verdichteten Bereiche (180, 190, 200, 290), die Wärmerohre und die Wärmesenken (24, 24bis 27) erhalten werden, indem während der Herstellung die metallurgischen Prozentsätze der verwendeten Legierung oder des verwendeten Metalls oder des gefüllten thermoplastischen Verbundmaterialien variiert werden.

7. Herstellungsverfahren nach irgendeinem der Ansprüche 1 bis 6, **dadurch gekennzeichnet, dass** das so hergestellte anisotrope Paneel funktionalisiert, mehrlagig und einstückig ist.

## Claims

1. A method for manufacturing a functionalized, stiffened, lightened anisotropic sandwich panel integrating mechanical and thermal functions, consisting in performing the following steps:
• manufacturing the lower skin (15, 16, 17, 26) to selected dimensions. made of metal or composite material with a filled thermoplastic matrix,
• raising, simultaneously with the construction of the lower skin, the core (18, 19, 20) made of the same materials as the lower skin (15, 16, 17, 26), to selected dimensions, in varying shapes and geometries, whether juxtaposed or not, and in varying densities,
• raising, simultaneously with the construction of the core (18, 19, 20), the densified areas (180, 190, 200, 290) or solid areas (21, 22, 23) ensuring mechanical junctions (21), to selected dimensions and in varying densities,
• raising, simultaneously with the construction of the core (18, 19, 20) and the densified areas (180, 190, 200, 290) or massive areas (21, 22, 23, 28), heat pipes or heat sinks (24, 24bis, 27), to selected dimensions, of varying shapes, in their planes and outside their planes, so as to obtain a functionalized core,
• raising, simultaneously with the construction of the lower skin and the functionalized core, the upper skin (25), to selected dimensions, made of the same materials and alloys as the lower skin (15, 16, 17, 26), so as to obtain the functionalized anisotropic sandwich panel.

2. The manufacturing method according to claim 1, wherein the lower skin (15, 16, 17, 26) and upper skin (25), the core (18, 19, 20, 29), the inserts (21, 22, 23, 28), the densified areas (180, 190, 200, 290), the heat pipes and the heat sinks (24, 24bis, 27) are obtained by adding metallic materials or alloys or thermoplastic resins filled with metal in the form of molten powders.

3. The manufacturing method according to any one of the preceding claims, wherein the core (18, 19, 20, 29), the inserts (21, 22, 23, 28), the densified areas (180, 190, 200, 290), the heat pipes and the heat sinks (24, 24bis, 27) are obtained during a single operation without the use of glues, i.e. almost simultaneously.

4. The manufacturing method according to any one of the preceding claims, wherein the core (18, 19, 20, 29), the inserts (21, 22, 23, 28), the densified areas (180, 190, 200, 290), the heat pipes and heat sinks (24, 24bis, 27) are made of profiles having varying geometries such as in the shape of the "cup of coffee", whether inversed or not (30), a pin-like, solid or hollow cylinder-like, triangle-like, square-like, or hexagon-like shape.

5. The manufacturing method according to any one of the preceding claims, wherein the profiles and shapes whatsoever of the core (18, 19, 20, 29) and the densified areas (180, 190, 200, 290) are adjacent, juxtaposed and joined or non-adjacent and disjointed according to the resistance to be insured.

6. The manufacturing method according to any one of the preceding claims, wherein the inserts (21, 22, 23, 28), the densified areas (180, 190, 200, 290), the heat pipes and the heat sinks (24, 24bis 27) are obtained by causing, during the manufacture, the metallurgical percentages of the alloy or metal being used or the filled thermoplastic composite to vary.

7. The manufacturing method according to any one of claims 1 to 6, wherein the so manufactured anisotropic panel is functionalized, multi-material and monobloc.
